# EUROPEAN PATENT APPLICATION

(11) **EP 1 900 711 A1**
(43) Date of publication of application: **19.03.2008**
(21) Application number: 06766750.1
(22) Date of filing: 15.06.2006
(51) Int. Cl.: C04B 41/82, B23H 1/06

(54) **CARBON MATERIAL AND METHOD OF PROCESSING CARBON MATERIAL**

(30) Priority: 07.07.2005 JP 2005198728
(71) Applicant: TOYO TANSO CO., LTD., Osaka-shi, Osaka 555-0011 (JP)
(72) Inventor: KONDO, Teruhisa, c/o TOYO TANSO CO., LTD., Osaka-shi, Osaka 5550011 (JP)
(74) Representative: Hart Davis, Jason
(86) International application number: PCT/JP2006/312016
(87) International publication number: WO 2007/007510

(57) **Abstract**

The present invention provides a carbon material and a machining method for the same in which a dust control agent such as paraffin, wax, and oil is impregnated into the inside of a carbon material before being machined so that dust is hardly generated from the carbon material itself when machining the carbon material impregnated with the dust control agent with a machine tool.

## Description

### TECHNICAL FIELD

The present invention relates to a carbon material to be machined into various carbon products such as an electric discharge machining electrode, and a machining method for the carbon material to be machined, more specifically, to a carbon material to be machined and a machining method for the carbon material to be machined which can prevent the generation of dust at the time of machining.

### BACKGROUND ART

For example, for an electric discharge machining electrode, a graphite material that is a carbon material is used. This graphite material is formed into a carbon material to be machined which has a comparatively large size such as 1 m³ through molding using coke as a filler and pitch as a binder, baked, and graphitized.

Machining for cutting this large-sized carbon material into a predetermined shape of a charge machining electrode is performed. At the time of this machining, an aggregate of a fine filler, etc., forming tissue is separated and dispersed and becomes dust and flies around. This carbon dust pollutes the working environment, and forces workers to use dust masks.

Therefore, for machining without generating dust from this graphite material, conventionally, measures have been taken for preventing dust, such as (1) a mechanical sealing method in which a machine tool is covered and hermetically sealed by an enclosure so as to prevent dust from going outside, (2) a submerged machining method in which machining is performed inside a liquid, or (3) as disclosed in the full text of Japanese Published Unexamined Utility Model Application No. H07-633, a jetting method in which a jet fluid is poured on a work and dust is flowed together with the jet fluid and recovered by filtrating the jet fluid.
Patent document: Full text of Japanese Published Unexamined Utility Model Application No. H07-633

### Disclosure of the Invention

### Problem to be Solved by the Invention

However, all of the above-described mechanical sealing method, submerged machining method, and jetting method require large-scaled apparatuses, and application of these for machining of a large-sized carbon material is impracticable.

Therefore, an object of the present invention is to provide a carbon material and a machining method for the same which makes it difficult to generate dust from a carbon material itself to be machined.

### Means for Solving the Problem

The inventors of the present invention earnestly considered a solution to the problem described above, and as a result, found that impregnation of a dust control agent such as paraffin into the inside of a carbon material prevents separation of each unit of the tissue and remarkably suppresses generation of dust, and reached completion of the present invention.

Specifically, a first aspect of the present invention relates to a carbon material to be machined in which a dust control agent is impregnated into the inside of the tissue of at least a machining portion. The dust control agent of the first aspect of the present invention is preferably any one or a combination of paraffin, wax, and oil (second aspect of the present invention). The carbon materials of the first and second aspects of the present invention are preferably isotropic carbon graphite materials (third aspect of the present invention).

A fourth aspect of the present invention relates to a carbon material machining method in which machining is performed after impregnating a dust control agent into the inside of the tissue of at least a machining portion of a carbon material to be machined. The carbon material of the fourth aspect of the present invention is preferably machined into an electric discharge machining electrode (fifth aspect of the present invention).

The present invention is described in greater detail as follows. A carbon material used in the present invention is a material substantially composed of only carbon, and includes various carbon materials such as carbonized materials and graphitized materials. In detail, the carbon material includes graphite materials such as a high-density isotropic graphite material obtained through cold isostatic pressing, high-density graphite obtained through hot pressing, and baked carbon materials, etc. The carbon material further includes carbon fiber reinforced materials and exfoliated graphite materials.

In the present invention, particularly, to secure evenness of machining, a highly isotropic material with an anisotropic ratio of 1.2 or less is preferably used. By using this, a part which is uniform in quality can be manufactured regardless of the direction of machining. Herein, the anisotropic ratio of 1.2 or less means that an average ratio of specific electrical resistance measured in arbitrary directions perpendicular to each other in the carbon material is 1.2 or less. To manufacture a part that is more uniform in quality, more preferably, the anisotropic ratio of the carbon material is 1.1 or less, and still more preferably, the anisotropic ratio of the carbon material is 1.05 or less.

It is preferable that the carbon material is a carbon material with a porosity of 5 to 20% and an average pore radius of 0.3 to 2.5 micrometers. By impregnating a dust control agent described later in the pores of the carbon material, the dust control agent can be impregnated into the inside of the tissue including at least a machining portion in just proportion. To more sufficiently impregnate the dust control agent into the inside of the tissue including at least a machining portion and sufficiently hold the dust control agent therein, more preferably, the porosity of the carbon material is 10 to 20%, and the average pore radius is 0.5 to 2.0 micrometers.

The average pore radius of the carbon material can be determined as a radius (micrometers) corresponding to 1/2 of an accumulative pore volume (cm³/g) measured according to the mercury intrusion technique by using a measuring device: a porosimeter 2000 manufactured by FISONS by setting sample dimensions of φ10×20 mm, a contact angle between mercury and carbon of 141.3 degrees, and a surface tension of mercury of 0.480 N/m, and the porosity can be calculated as (bulk density) × (total pore volume)×100. Herein, the total pore volume (cm³/g) is an accumulative pore volume when the pressure reaches a predetermined maximum pressure, for example, 100 MPa.

As the dust control agent to be impregnated in the pores of the carbon material, from the perspectives (1) through (4) described below, any one or a combination of paraffin, wax, and oil is used.
(1) This has a melting point that is not high and becomes a liquid at normal temperatures or by slight heating, and impregnation by soaking the whole or a part of the carbon material in this agent is easy.
(2) This agent can be impregnated in the form of a liquid, so that it can be contained deep into the pores of the carbon materials.
(3) All of paraffin, wax, and oil are not toxic, and workers can safely perform machining. In use after being formed into a part, even if it remains, it rarely becomes toxic.
(4) Paraffin, wax, and oil have a lubricating function, and makes easy machining of the carbon material. For example, if a metal, ceramic, or thermosetting resin is impregnated, machinability is deteriorated, however, on the other hand, paraffin, wax, and oil improves the machinability.

As an amount of the dust control agent to be impregnated in the carbon material, an impregnation ratio of 45% or more is preferable. The impregnation ratio into the carbon material is a value I (%) expressed by an equation of I= 100G/PD. Herein, P indicates a measured value (cm³) of a volume of pores of the carbon material, D indicates a true density (g/cm³) of the dust control agent, and G indicates a weight (g) of the dust control agent actually impregnated. Specifically, the value I shows a volume ratio of the dust control agent to the pores.

Paraffin is an aliphatic saturated hydrocarbon shown as CₙH₂ₙ₊₂; and as paraffin, paraffin of C5 or more being a liquid at normal temperatures, paraffin of C16 or more being a solid at normal temperatures, liquid paraffin as a liquid mixture, or paraffin oil is used.
As the wax, a wax in the form of a fatty solid or a liquid which provides a smooth touch at normal temperatures and consists mainly of fatty acid and ester of monovalent or bivalent higher alcohol is used. For example, there are available fatty acid esters such as laurate ester, myristic acid ester, palmitate ester, stearic acid ester, oleate ester, montanic acid ester, and sebacic acid ester, etc., and natural waxes such as carnauba wax, rice wax, candelilla wax, and Japan wax, etc.
As the oil, an oil which consists mainly of glycerin ester of a fatty acid and is in the form of a solid at normal temperatures is used. For example, there are available naturally-derived oils including vegetable oils such as soybean oil, linseed oil, ricinus, coconut oil, tung oil, and sunflower oil, and animal oils such as fish oil, synthetic oil consisting mainly of glycerin ester of fatty acid, and the like.
These paraffin, wax, and oil can be used singly or in combination.

Impregnation of such a dust control agent into the carbon material is performed by filling a container with the dust control agent that has become a liquid with a prescribed viscosity by heating as necessary and soaking the whole or a part of the carbon material in the dust control agent. The above-described dust control agent has high penetration into the carbon material, and penetrates into the inside of the tissue through pores with time. If necessary, the dust control agent in the container is increased in penetration by enabling pressurizing, or one side surface of the carbon material is vacuumed and the dust control agent is suctioned to the inside of the tissue. When the machining portion of the carbon material is limited, the dust control agent may be impregnated in only the limited portion.

By leaving the carbon material after being permeated with the dust control agent for a prescribed time, an extra dust control agent is discharged from the carbon material. The dust control agent remaining on the surface is wiped off. Then, the carbon material can be maintained in a state that it can be handled easily in machining with a machine tool.

The carbon material thus impregnated with the dust control agent to the inside tissue is then machined with various machine tools. Machining with machine tools includes various machining such as cutting with a milling cutter or the like and surface machining with a grinding machine, etc.

### Effect of the Invention

With the above-described construction, the carbon material contains the dust control agent to the inside tissue. Even if fine particles of the tissue are generated due to machining, this dust control agent functions as a binder, the fine particles aggregate and become grains or powder that does not scatter around and fall inside the machine tool. Thereby, dust scattering can be prevented. Fine particles on the surface of the carbon material are removed by ultrasonic cleaning after machining, and at this time, the surface cleaning becomes easy due to condensation of the fine particles by the dust control agent. Further, depending on the use, the dust control agent still shows the dust prevention function even after the carbon material is machined into a product. For example, when the carbon material is machined into an electric discharge machining electrode, carbon fine particles generated due to exhaustion of the electrode at the time of submerged electric discharge machining also condense in the liquid, and fine-particle dispersion into the liquid can be suppressed.

### Examples

Hereinafter, the present invention will be described in detail based on examples, however, the present invention is not limited to these examples.

### (Example 1)

Isotropic graphite (anisotropic ratio: 1. 05, porosity: 17%, average pore radius: 0.5 micrometers) made by Toyo Tanso Co., Ltd., was impregnated with paraffin (Katameruchuck S55 made by Denso) to an impregnation ratio of 60%. This impregnated isotropic graphite was machined with a milling cutter to manufacture an electric discharge machining electrode.

Dust generated during machining was remarkably suppressed, and machining dust could be recovered to about 100% in the milling cutter. The machining accuracy was kept excellent. The surface did not require ultrasonic cleaning.

### (Example 2)

Isotropic graphite (anisotropic ratio: 1.05, porosity: 10%, average pore radius: 1.0 micrometer) made by Toyo Tanso Co., Ltd., was impregnated with paraffin to an impregnation ratio of 60%. Thereafter, according to procedures similar to those in Example 1, an electric discharge machining electrode was manufactured. The result was the same as in Example 1.

### (Example 3)

Isotropic graphite (anisotropic ratio: 1.05, porosity: 15%, average pore radius: 1. 6 micrometers) made by Toyo Tanso Co., Ltd., was impregnated with paraffin to an impregnation ratio of 70%. Thereafter, according to procedures similar to those in Example 1, an electric discharge machining electrode was manufactured. The result was the same as in Example 1.

### (Example 4)

Isotropic graphite (anisotropic ratio: 1.05, porosity: 20%, average pore radius: 1. 7 micrometers) made by Toyo Tanso Co., Ltd., was impregnated with paraffin to an impregnation ratio of 70%. Thereafter, according to procedures similar to those in Example 1, an electric discharge machining electrode was manufactured. The result was the same as in Example 1.

### (Example 5)

Isotropic graphite (anisotropic ratio: 1.05,porosity: 13%, average pore radius: 2.0 micrometers) made by Toyo Tanso Co., Ltd., was impregnated with paraffin to an impregnation ratio of 70%. Thereafter, according to procedures similar to those in Example 1, an electric discharge machining electrode was manufactured. The result was the same as in Example 1.

### (Example 6)

Isotropic graphite (anisotropic ratio: 1.05, porosity: 16%, average pore radius: 2.4 micrometers) made by Toyo Tanso Co., Ltd., was impregnated with paraffin to an impregnation ratio of 60%. Thereafter, according to procedures similar to those in Example 1, an electric discharge machining electrode was manufactured. The result was the same as in Example 1.

### (Example 7)

Isotropic graphite (anisotropic ratio: 1.05, porosity: 12%, average pore radius: 0.2 micrometers) made by Toyo Tanso Co., Ltd., was impregnated with paraffin to an impregnation ratio of 50%. Thereafter, according to procedures similar to those in Example 1, an electric discharge machining electrode was manufactured.

Dust generated during machining was remarkably suppressed, and machining dust could be recovered to about 100% in the mil ling cutter. The machining accuracy was kept excellent. Although the dust generation suppression effect visually confirmed was slightly inferior to that in Examples 1 through 6, the surface did not require ultrasonic cleaning.

### (Example 8)

Isotropic graphite (anisotropic ratio: 1.05, porosity: 26%, average pore radius: 3.0 micrometers) made by Toyo Tanso Co., Ltd., was impregnated with paraffin to an impregnation ratio of 50%. Thereafter, according to procedures similar to those in Example 1, an electric discharge machining electrode was manufactured.

Dust generated during machining was remarkably reduced, and machining dust could be recovered to about 100% in the milling cutter. The machining accuracy was kept excellent. Although the dust generation reduction effect visually confirmed was slightly inferior to that in Examples 1 through 6, the surface did not require ultrasonic cleaning.

### (Example 9)

Isotropic graphite (anisotropic ratio: 1.05, porosity: 10%, average pore radius: 1.0 micrometer) made by Toyo Tanso Co., Ltd., was impregnated with wax (EXCEPARL made by Kao) to an impregnation ratio of 50%. Thereafter, according to procedures similar to those in Example 1, an electric discharge machining electrode was manufactured. The result was the same as in Example 1.

### (Example 10)

Isotropic graphite (anisotropic ratio: 1.05, porosity: 10%, average pore radius: 1.0 micrometer) made by Toyo Tanso Co., Ltd., was impregnated with wax (EXCEL, made by Kao) to an impregnation ratio of 50%. Thereafter, according to procedures similar to those in Example 1, an electric discharge machining electrode was manufactured. The result was the same as in Example 1.

### (Example 11)

Isotropic graphite (anisotropic ratio: 1.05, porosity: 22%, average pore radius: 2.4 micrometers) made by Toyo Tanso Co., Ltd., was impregnated with paraffin to an impregnation ratio of 50%. Thereafter, according to procedures similar to those in Example 1, an electric discharge machining electrode was manufactured.

Dust generated during machining is conspicuous, and the recovery ratio of machining dust in the machine was 70%. Fine particles adhered to the surface of the machined product, so that ultrasonic cleaning was performed.

### (Example 12)

Carbon baked material (anisotropic ratio: 1. 05, porosity: 4%, average pore radius: 1.0 micrometer) made by Toyo Tanso Co., Ltd., was impregnated with paraffin to an impregnation ratio of 45%. Thereafter, according to procedures similar to those in Example 1, an electric discharge machining electrode was manufactured. The result was the same as in Example 2.

### (Example 13)

Isotropic graphite (anisotropic ratio: 1.05, porosity: 18%, average pore radius: 2.7 micrometers) made by Toyo Tanso Co., Ltd., was impregnated with paraffin to an impregnation ratio of 50%. Thereafter, according to procedures similar to those in Example 1, an electric discharge machining electrode was manufactured. The result was the same as in Example 2.

### (Example 14)

Isotropic graphite (anisotropic ratio: 1.05,porosity: 11%, average pore radius: 0.2 micrometers) made by Toyo Tanso Co., Ltd., was impregnated with paraffin to an impregnation ratio of 50%. Thereafter, according to procedures similar to those in Example 1, an electric discharge machining electrode was manufactured. The result was the same as in Example 2.

### (Example 15)

Isotropic graphite (anisotropic ratio: 1.05, porosity: 10%, average pore radius: 1.0 micrometer) made by Toyo Tanso Co., Ltd., was impregnated with paraffin to an impregnation ratio of 35%. Thereafter, according to procedures similar to those in Example 1, an electric discharge machining electrode was manufactured.

Dust generated during machining is conspicuous, and the recovery ratio of machining dust in the machine was 60%. Fine particles adhered to the surface of the machined product, so that ultrasonic cleaning was performed.

### (Example 16)

For comparison, isotropic graphite (anisotropic ratio: 1.05, porosity: 10%, average pore radius: 1.0 micrometer) made by Toyo Tanso Co., Ltd., was machined with a milling cutter without being impregnated with a dust control agent to manufacture an electric discharge machining electrode.

Dust generated during machining is of a large amount, and the recovery ratio of machining dust in the machine was 50%. Fine particles adhered to the surface of the machined product, so that ultrasonic cleaning was performed.

When the electric discharge machining electrode of Example 1 was used for machining a metal (Material: S55C) in an electric discharge machining fluid, no contamination was observed in the fluid after 1 hour, however, when the electric discharge machining electrode of Example 16 was used for machining in the electric discharge machining fluid, the fluid blackened after one hour.

The results of Examples 1 through 16 are summarized in Table 1 below.

**[Table 1]**

| | Carbon material | Porosity | Average pore radius (µm) | Dust control agent | Impregnation ratio (%) | Machining method | Machining dust recovery ratio (%) | Remarks |
|---|---|---|---|---|---|---|---|---|
| Example 1 | Isotropic | 17 | 0.5 | Paraffin | 60 | Milling cutter | 100 | Ultrasonic cleaning not required |
| Example 2 | Isotropic | 10 | 1.0 | Paraffin | 60 | Milling cutter | 100 | Ultrasonic cleaning not required |
| Example 3 | graphite | 15 | 1.6 | Paraffin | 70 | Milling cutter | 100 | Ultrasonic cleaning not required |
| Example 4 | Isotropic graphite | 20 | 1.7 | Paraffin | 70 | Milling cutter | 100 | Ultrasonic cleaning not required |
| Example 5 | Isotropic graphite | 13 | 2.0 | Paraffin | 70 | Milling cutter | 100 | Ultrasonic cleaning not required |
| Example 6 | Isotropic graphite | 16 | 2.4 | Paraffin | 60 | Milling cutter | 100 | Ultrasonic cleaning not required |
| Example 7 | Isotropic graphite | 12 | 0.3 | Paraffin | 45 | Milling cutter | Almost 100 | Ultrasonic cleaning not required |
| Example 8 | Isotropic graphite | 20 | 2.5 | Paraffin | 45 | Milling cutter | Almost 100 | Ultrasonic cleaning not required |
| Example 9 | Isotropic graphite | 10 | 1.0 | Wax | 45 | Milling cutter | 60 | Ultrasonic cleaning not required |
| Example 10 | Isotropic graphite | 10 | 1.0 | Oil | 45 | Milling cutter | 100 | Ultrasonic cleaning not required |
| Example 11 | Isotropic graphite | 22 | 2.4 | Paraffin | 50 | Milling cutter | 70 | Fine particles adhered to product surface. |
| Example 12 | Baked material | 4 | 1.0 | Paraffin | 45 | Milling cutter | 70 | Fine particles adhered to product surface. |
| Example 13 | Isotropic graphite | 18 | 2.7 | Paraffin | 50 | Milling cutter | 70 | Fine particles adhered to product surface. |
| Example 14 | Isotropic graphite | 11 | 0.2 | Paraffin | 45 | Milling cutter | 70 | Fine particles adhered to product surface. |
| Example 15 | Isotropic graphite | 10 | 1.0 | Paraffin | 35 | Milling cutter | 60 | Fine particles adhered to product surface. |
| Example 16 | Isotropic graphite | 10 | 1.0 | - | - | Milling cutter | 50 | Fine particles adhered to product surface. |

According to the above-described results, by the easy method in which a dust control agent is impregnated into the inside of the tissue of the carbon material to be machined, a carbon material and a machining method for the same can be provided which hardly generates dust from the carbon material itself to be machined into various carbon products such as an electric discharge machining electrode.

The present invention can be changed in design without departing from the scope of the claims, and should not be limited to the above-described embodiments and examples.

## Claims

1. A carbon material to be machined, wherein the carbon material is impregnated with a dust control agent in the inside of a tissue of at least a machining portion.

2. The carbon material according to Claim 1, wherein the dust control agent is any one or a combination of paraffin, wax, and oil.

3. The carbon material according to Claim 1 or 2, wherein the carbon material is an isotropic graphite material.

4. A carbon material machining method wherein machining is performed after impregnating a dust control agent into the inside of a tissue of at least a machining portion of a carbon material to be machined.

5. The carbon material machining method according to Claim 4, wherein the carbon material is machined into an electric discharge machining electrode.
